# EUROPÄISCHE PATENTSCHRIFT

(11) **EP 3 830 006 B1**
(45) Veröffentlichungstag und Bekanntmachung des Hinweises auf die Patenterteilung: **15.07.2026**
(21) Anmeldenummer: 19766234.9
(22) Anmeldetag: 10.09.2019
(51) Int. Cl.: B65G 35/06, B65G 45/04, B65G 54/02

(54) **TRANSPORTWAGEN**
TRANSPORT TROLLEY
CHARIOT DE TRANSPORT

(30) Priorität: 12.09.2018 DE 102018122287
(43) Veröffentlichungstag der Anmeldung: 09.06.2021
(73) Patentinhaber: Weiss GmbH, 74722 Buchen (Odw.) (DE)
(72) Erfinder: GÖTZINGER, Martin, 74722 Buchen (DE); INSEL, Christian, 74722 Buchen (DE); NEUWEILER, Lutz, 68535 Edingen-Neckarhausen (DE)
(74) Vertreter: Manitz Finsterwald Patent- und Rechtsanwaltspartnerschaft mbB
(86) Internationale Anmeldenummer: PCT/EP2019/074029
(87) Internationale Veröffentlichungsnummer: WO 2020/053167

(56) Entgegenhaltungen:
- EP-A1- 2 387 920
- EP-A1- 3 078 617
- DE-A1- 10 106 203
- DE-A1- 10 164 478

## Beschreibung

Die vorliegende Erfindung betrifft einen Transportwagen zum Transportieren von Objekten für ein Schienensystem mit zumindest einer Schiene, die zumindest drei Laufflächen aufweist.

Ferner betrifft die Erfindung ein Transportsystem mit einem Schienensystem mit zumindest einer Schiene, die zumindest drei Laufflächen aufweist, und mit zumindest einem erfindungsgemäßen Transportwagen.

Transportwagen und entsprechende Transportsysteme werden beispielsweise in der Automatisierungstechnik verwendet, um Objekte von einem Ort zu einem anderen Ort zu transportieren, beispielsweise von einem Fertigungsschritt zum nächsten. Hierzu werden die Objekte auf Transportwagen positioniert und die Transportwagen werden entlang einer Schiene verfahren. Die Schiene kann dabei geradlinige und/oder gekrümmte Abschnitte aufweisen.

In der Praxis wird besonders auf die Kurvengängigkeit des Systems Wert gelegt, da nicht kurvengängige Systeme diskontinuierlich arbeiten und ihre Taktraten limitiert sind. Des Weiteren sollten die Schienensysteme zugleich eine hohe Tragfähigkeit sowie eine gute Profilgenauigkeit aufweisen, um sowohl hohe Lasten transportieren zu können als auch eine hohe Genauigkeit in der Positionierung der Transportwagen und geringe Geräuschentwicklung beim Transport zu gewährleisten.

Von wesentlicher Bedeutung ist es außerdem, dass die Transportwagen bzw. die Transportsysteme zuverlässig arbeiten und dennoch kostengünstig in der Herstellung und der Montage sind.

Die EP 3 078 617 A1 beschreibt eine Transportvorrichtung mit einem Schienensystem, auf dem Transportwagen Objekte transportieren können. Die Transportwagen weisen einen Grundkörper und einen drehbar gelagerten Laufrollenträger auf, wobei an dem Laufrollenträger drei Laufrollen drehbar gelagert sin. Die zur drehbaren Lagerung der Laufrollenträger erforderlichen Komponenten sind mittels Schrauben an den Grundkörper befestigt. EP 3 078 617 A1 offenbart somit den Oberbegriff des Anspruchs 1.

Es ist daher die Aufgabe der Erfindung einen Transportwagen sowie ein Transportsystem bereitzustellen, die alle der oben genannten noch besser Anforderungen erfüllen.

Die Aufgabe wird durch einen Transportwagen gemäß Anspruch 1 sowie durch ein Transportsystem gemäß Anspruch 13 gelöst.

Ein erfindungsgemäßer Transportwagen umfasst einen Grundkörper mit einem Objektträger zur Aufnahme zumindest eines Objektes, einen - z.B. mittels zumindest einem Wälz- oder Gleitlager - an dem Grundkörper drehbar gelagerten Laufrollenträger, an dem zumindest eine erste, eine zweite und eine dritte Laufrolle drehbar gelagert sind, und ein Justagesystem mit einer Laufrollenträgerjustageeinrichtung zur Ausrichtung des Laufrollenträgers relativ zum Grundkörper und mit einer Laufrollenjustageeinrichtung zur relativen Ausrichtung der Laufrollen zueinander und/oder zum Grundkörper. Der Laufrollenträger mit den daran gelagerten Laufrollen kann dabei als vormontierte Baugruppe bereitgestellt werden, um die Montage am Grundkörper zu vereinfachen. Vorzugsweise umgreifen dann die erste, die zweite und die dritte Laufrolle gemeinsam die Schiene zumindest teilweise. Es ist dabei unwesentlich, von welcher Raumrichtung aus betrachtet die Laufrollen die Schiene (teilweise) umgreifen (z. B. seitlich oder von oben) bzw. welche der Laufflächen die Gewichtskraft des Objektträgers aufnimmt. Prinzipiell wäre es auch denkbar, dass die Laufrollen innerhalb der Schiene angeordnet sind bzw. die Laufrollen die Schiene nicht umgreifen sondern beispielsweise vom Laufrollenträger gegen diese gedrückt werden (z. B. von innen nach außen). Die drehbare Lagerung des Laufrollenträgers kann einerseits dafür sorgen, dass die Ausrichtung des Objektträgers, welcher am Grundkörper befestigt ist, zur Schiene flexibel eingestellt werden kann und andererseits, dass der Transportwagen kurvengängig ist, da sich der Laufrollenträger an den Verlauf der Schiene anpassen kann, ohne dass sich die Ausrichtung des Objektträgers relativ zur Schiene verändert. Zusätzlich zu der drehbaren Lagerung des Laufrollenträgers ist das Justagesystem mit seiner Laufrollenträgerjustageeinrichtung und der Laufrollenjustageeinrichtung vorgesehen, welches dazu dient, den Transportwagen optimal auf das Schienensystem einzustellen. Durch das Justagesystem kann der Transportwagen bzw. die Ausrichtung des Transportwagens relativ zum Schienensystem in vorzugsweise zumindest zwei Raumrichtungen flexibel eingestellt werden.

Gemäß einer Ausführungsform sind die Rotationsachsen der ersten und der zweiten Laufrolle parallel zueinander angeordnet und die Rotationsachse der dritten Laufrolle steht senkrecht zu den Rotationsachsen der ersten und zweiten Laufrolle. Beispielsweise stehen sich die erste und zweite Laufrolle parallel gegenüber während die dritte Laufrolle senkrecht und - falls erforderlich - versetzt dazu angeordnet ist. Die Laufrollen können dementsprechend in einer gemeinsamen Ebene, welche senkrecht zur Transportrichtung verläuft, angeordnet oder in Transportrichtung betrachtet versetzt zueinander sein. Durch diese Ausrichtung der Laufrollen kann sich der Transportwagen auf einer sogenannten Rechteckschiene bewegen, in dem die Laufrollen drei Seiten bzw. Laufflächen der Rechteckschiene umgreifen oder - bei einem Hohlprofil - von innen gegen diese drücken. Rechteckschienen haben im Vergleich sogenannten V-Schienen den Vorteil, dass auf ihnen größere Nutzlasten transportiert werden können, ohne dass die Schienen schnell Abnutzungserscheinungen aufweisen. Dennoch ist es bei Rechteckschienen möglich, die notwendige Profilgenauigkeit zu realisieren.

Eine Ausführungsform sieht es vor, dass der Laufrollenträger einstückig ausgebildet ist. Eine einstückige Ausbildung des Laufrollenträgers hat sich vor allem bezüglich der Produktionskosten und der Einfachheit der Montage als besonders vorteilhaft erwiesen.

Gemäß einem weiteren Ausführungsbeispiel weist die Laufrollenträgerjustageeinrichtung zumindest ein Abstandselement zum Festlegen eines Abstands und/oder einer Lage des Laufrollenträgers zum Grundkörper auf. Dadurch lässt sich der Transportwagen flexibel und passgenau auf die Schiene, auf der er sich bewegt, einstellen und ist nicht auf nur eine ganz spezielle Schiene festgelegt. Das Abstandselement kann einstückig oder mehrstückig ausgebildet sein. Es kann auch bedarfsgerecht einstellbar sein. Beispielsweise umfasst das Abstandselement einen entsprechenden Einstellmechanismus (z.B. einen Schraubmechanismus), um den Abstand und/oder die Lage des Laufrollenträgers zum Grundkörper einfach und genau einstellen zu können.

Gemäß einem weiteren Ausführungsbeispiel ist das Abstandselement zumindest eine zwischen dem Grundkörper und dem Laufrollenträger einlegbare Scheibe. Eine derartige Scheibe kann beispielsweise als Distanzring ausgeformt sein. Die Dicke eines solchen Distanzringes kann je nach Anwendung, Transportwagen und Schienensystem variieren und passend gewählt werden. Das Abstandselement dient einerseits dazu, gemeinsam mit dem Grundkörper, den Transportwagen an dem Schienensystem vorzuspannen, und andererseits dazu, den Objektträger, der als Schnittstelle zwischen Transportsystem und Benutzer dient, derart auszurichten, dass dieser immer die gleiche Höhe aufweist, vor allem wenn mehrere Transportwagen zugleich im Einsatz sind. Das Abstandselement kann bei Bedarf auch schräg oder unregelmäßig ausgebildet sein, etwa um eine Lage des Laufrollenträgers (z. B. dessen Neigung) zum Grundkörper bewusst zu ändern bzw. einzustellen.

Es ist auch denkbar, dass die Laufrollenjustageeinrichtung ein Einstellmittel zum Einstellen eines Abstands, einer Lage und/oder einer Ausrichtung von zumindest einer Laufrolle relativ zum Laufrollenträger aufweist. Durch das Einstellmittel kann die Laufrolle bzw. können die Laufrollen passgenau auf die verwendete Schiene eingestellt werden. Vor allem wenn zwei Laufrollen parallel zueinander ausgerichtet sind und die Schiene zwischen diesen beiden Laufrollen eingespannt ist, ist es von großer Wichtigkeit, dass der Abstand eben jener Laufrollen passgenau auf die Schiene eingestellt werden kann. Das Einstellmittel erlaubt es beispielsweise den Abstand zwischen zwei Laufrollen symmetrisch zum Laufrollenträger zu verändern. Es ist aber auch denkbar, dass die Lage von nur einer Laufrolle verändert wird und die Rollen dadurch nicht mehr symmetrisch zum Laufrollenträger angeordnet sind. Die Einstellbarkeit durch das Einstellmittel hat sich als besonders vorteilhaft erwiesen, wenn Transportwagen in einem bereits bestehenden Schienensystem - beispielsweise als Ersatzteile - ausgetauscht oder ergänzt werden müssen. Bei Bedarf kann das Einstellmittel auch derart ausgebildet sein, dass eine Neigung einer Rotationsachse der Laufrollen beeinflusst ist.

Gemäß einer weiteren Variante ist zusätzlich ein Mittel zur Beeinflussung der Steifigkeit des Grundkörpers und/oder des Laufrollenträgers vorgesehen. Dieses Mittel kann beispielsweise ein elastisches Element sein, das eine gewisse Elastizität in den Grundkörper und/oder den Laufrollenträger bringt. Es wäre aber auch möglich, dass das Mittel durch eine Aussparung im Grundkörper und/oder im Laufrollenträger, durch die der Grundkörper bzw. der Laufrollenträger sich bis zu einem gewissen Grad lokal dehnen bzw. stauchen kann, realisiert wird. Eine weitere Möglichkeit wäre es auch, eine Feder im Grundkörper und/oder im Laufrollenträger vorzusehen. Es versteht sich, dass auch alle Varianten miteinander kombiniert werden können.

Eine bevorzugte Ausführungsform sieht vor, dass das Mittel zur Beeinflussung der Steifigkeit zumindest ein Schlitz in dem Grundkörper und/oder dem Laufrollenträger ist. Dieser Schlitz kann - wie oben bereits erwähnt - eine gewisse Dehnbarkeit des Grundkörpers und/oder Laufrollenträgers bewirken. Es wäre auch denkbar, dass ein Verstellmittel, vorzugsweise eine Schraube, eine Feder oder eine beliebiges elastisches Material, in dem Schlitz - oder der vorstehend erwähnten Aussparung - angeordnet ist, um diesen bei Bedarf zu spreizen bzw. zu stauchen.

Es ist des Weiteren auch denkbar, dass der Schlitz im Wesentlichen parallel zu der Rotationsachse zumindest einer der Laufrollen angeordnet ist. Andere Ausrichtungen des Schlitzes - beispielsweise schräg - sind bei Bedarf jedoch auch realisierbar. Durch eine parallele Anordnung des Schlitzes zu der Rotationsachse einer Laufrolle kann bei einer Dehnung die relative Lage und/oder Ausrichtung der Laufrolle zur Schiene verändert werden.

Erfindungsgemäß sind zur drehbaren Lagerung des Laufrollenträgers zumindest zwei Wälzlager, insbesondere Schrägkugellager, vorgesehen. Schrägkugellager sind besonders für Lagerungen konzipiert, bei denen kombinierte Belastungen wie etwa gleichzeitig wirkende Radial- und Axialbelastungen auftreten. Paarweise verbaute Schrägkugellager ermöglichen insbesondere sowohl hohe Laufgenauigkeiten als auch eine hohe Steifigkeit.

Ferner ist ein Spannungsmittel vorgesehen, mit dem die zumindest zwei Wälzlager gegeneinander vorspannbar sind. Eine derartige Vorspannung kann beispielsweise durch Abstandsringe, Schrauben oder Federn erhöht oder verringert werden, indem auf die Lager durch das Spannungsmittel mehr oder weniger Druck ausgeübt wird.

Die Lagerung des Laufrollenträgers kann auch - zusätzlich oder alternativ - ein oder mehrere Gleitlager umfassen. Beispielsweise ist der Träger mit einem bolzenartigen Lagerabschnitt versehen, der direkt oder indirekt in dem Grundkörper gleitend gelagert ist. Eine indirekte Lagerung kann eine Buchse umfassen, die den Lagerabschnitt aufnimmt und die in dem Grundkörper fixiert ist. Zur Minimierung der Gleitreibung können der Lagerabschnitt, der Grundkörper und/oder -falls vorhanden - die Buchse mit einer Beschichtung versehen sein, z.B. mit einer Nickel-Teflon-Beschichtung.

Eine Ausführungsform sieht es auch vor, dass an einer dem Objektträger gegenüberliegenden Seite des Grundkörpers ein Gegendruckelement vorgesehen ist, das den Transportwagen an der Schiene des Schienensystems sichert, insbesondere unter einer Vorspannung. Dies bewirkt, dass der Transportwagen sowohl eine ausreichend hohe Laufgenauigkeit erreicht als auch bei hohen Laufgeschwindigkeiten nicht von der Schiene fallen kann. Das Gegendruckelement kann eine an dem Grundkörper drehbar gelagerte Laufrolle umfassen.

Es ist auch denkbar, dass das Gegendruckelement einen an dem Grundkörper drehbar gelagerten oder fest mit ihm verbundenen Laufrollenträger aufweist, an dem zumindest eine vierte Laufrolle drehbar gelagert ist, insbesondere an dem zumindest drei Laufrollen drehbar gelagert sind. Das Gegendruckelement könnte also mit anderen Worten ein weiterer, im Wesentlichen baugleich ausgebildeter Laufrollenträger sein, der mindestens eine Laufrolle aufweist.

Ein bevorzugtes Ausführungsbeispiel sieht es vor, dass das Gegendruckelement zusätzlich ein Justagesystem mit einer Laufrollenträgerjustageeinrichtung zur Ausrichtung des Laufrollenträgers relativ zum Grundkörper und/oder mit einer Laufrollenjustageeinrichtung zur relativen Ausrichtung der Laufrolle zum Grundkörper und/oder der Laufrollen - falls mehr als eine Laufrolle vorhanden ist - aufweist. Der Aufbau des Transportwagens kann zumindest hinsichtlich seiner Führungskomponenten symmetrisch sein, insbesondere indem der Transportwagen zwei im Wesentlichen gleichartig ausgebildete Laufrollenträger mit zwei im Wesentlichen gleichartig ausgebildeten Justagesystemen aufweist, welche spiegelsymmetrisch zueinander angeordnet sind. Der Aufbau des Transportwagens muss aber auch nicht notwendigerweise symmetrisch sein, da bedarfsgerecht bestimmt werden kann, wie viele Laufrollen das Gegendruckelement aufweist.

Gemäß einer Ausführungsform weist der Transportwagen zumindest einen Laufrollenträger mit einem Justagesystem sowie zumindest ein Gegendruckelement auf, das als an dem Grundkörper drehbar gelagerte Laufrolle ausgebildet ist. Zusätzlich ist zumindest ein Laufrollenpaar vorgesehen, die direkt an dem Grundkörper drehbar gelagert sind und die in Bezug auf die Schiene in Gebrauchslage des Wagens einander gegenüberliegend angeordnet sind. Bildlich gesprochen umgreifen diese Rollen die Schiene seitlich. Zudem sind sie derart angeordnet, dass sie mit einem Abschnitt der Schiene zusammenwirken, der dem Schienenabschnitt gegenüberliegt, mit dem die Rollen des Laufrollenträgers zusammenwirken. Sie können justierbar angeordnet sein. Zwar ist die vorstehend beschriebene Konstruktion nicht ganz so präzise und praktisch ruckfrei bewegbar, wie eine Konstruktion mit einander gegenüber liegenden Laufrollenträgern. Sie ist jedoch kostengünstiger herstellbar und für viele Anwendung hinreichend.

Gemäß einer Ausführungsvariante ist zumindest einer der, insbesondere jeder der Laufrollen eine Schmiereinheit zugeordnet, die die jeweilige Laufrolle mit einem Schmiermittel versorgt. Dadurch wird die Lebenszeit der entsprechenden Laufrolle bzw. des Schienensystems verlängert.

Gemäß einer weiteren Ausführungsvariante ist der Laufrollenträger im Wesentlichen T-förmig ausgebildet. Insbesondere dient - in einem Querschnitt betrachtet - der vertikale Teil des T der Lagerung des Laufrollenträgers an dem Grundkörper, während der "Querbalken" die Laufrollen trägt.

Des Weiteren ist ein Transportsystem vorgesehen mit einem Schienensystem mit zumindest einer Schiene, die zumindest drei Laufflächen aufweist, und mit zumindest einem erfindungsgemäßen Transportwagen.

Gemäß einer Ausführungsform des Systems sind zumindest zwei der Laufflächen parallel zueinander angeordnet und/oder zumindest zwei der Laufflächen rechtwinklig zueinander angeordnet. Eine Variante der Schiene kann die oben beschriebene Rechteckschiene sein.

Die Erfindung wird nachfolgend rein beispielhaft anhand vorteilhafter Ausführungsformen unter Bezugnahme auf die Figuren näher erläutert. In diesen zeigen:
- Fig. 1:: ein Schienensystem mit einem Transportwagen;
- Fig. 2:: einen Schnitt durch einen Transportwagen;
- Fig. 3:: einen Transportwagen in einer perspektivischen Ansicht;
- Fig. 4:: einen Laufrollenträgerkörper mit Laufrollen; und
- Fig. 5:: einen Schnitt durch einen Transportwagen gemäß einer zweiten Ausführungsform.

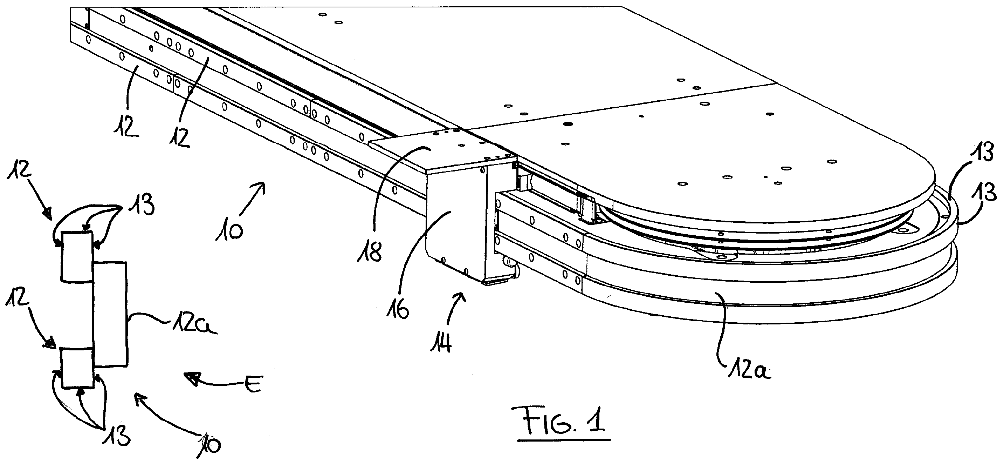

Die Fig. 1 zeigt einen Teil eines Schienensystems 10 mit zwei umlaufenden Schienen 12 zur Führung eines oder mehrerer Transportwagen 14. Der Antrieb des Transportwagens 14 kann beispielsweise mechanisch (z. B. Bandantrieb, Kurvenzylinderantrieb usw.) und/oder elektromagnetisch (z. B. Linearmotor) erfolgen.

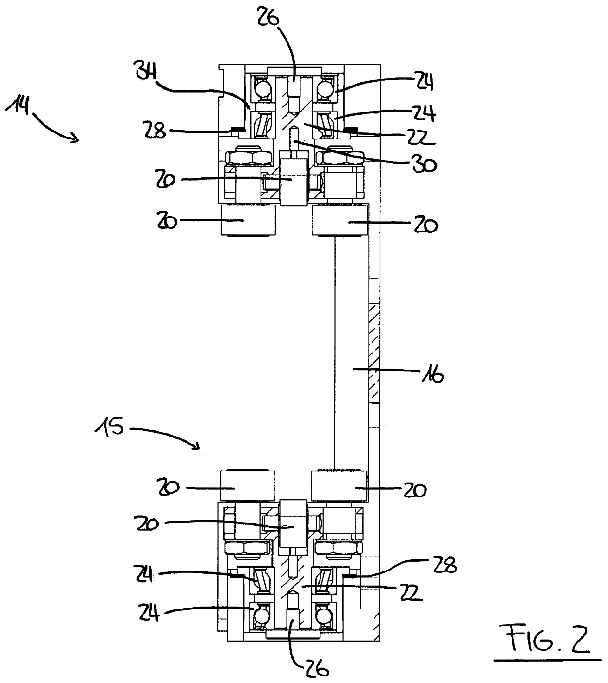

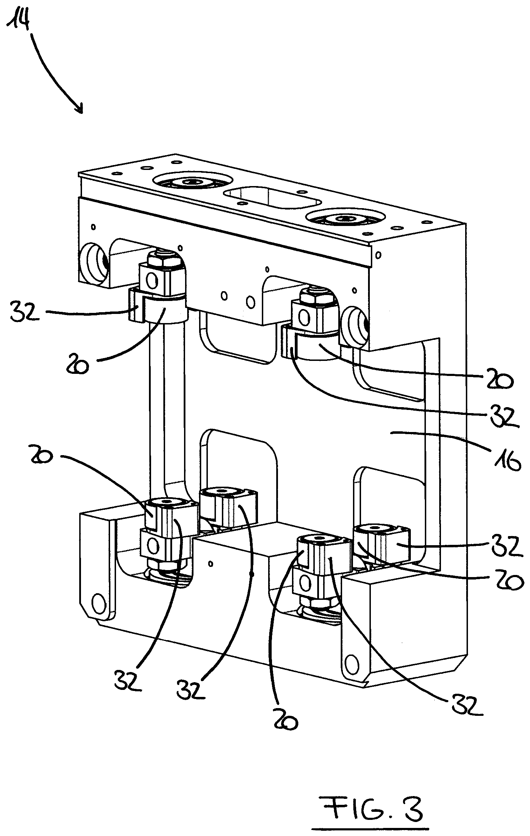

Der Transportwagen 14 weist einen Grundkörper 16 und einen daran fest befestigten oder drehbar gelagerten Objektträger 18 auf, auf dem (nicht dargestellte) Objekte transportiert werden können. Der Grundkörper 16 kann sowohl einstückig als auch mehrteilig - z. B. zweiteilig - ausgebildet sein. Insbesondere die mehrteilige Ausbildung vereinfacht die Montage und/oder das Aufsetzen des Transportwagens 14 auf die Schiene 12. Auf eine detailliertere Beschreibung des Transportwagens 14 wird später mit Bezug auf die Figuren 2 und 3 näher eingegangen. In Fig. 1 ist des Weiteren zu sehen, dass die Schienen 12 als sogenannte Rechteckschienen ausgebildet sind - also drei Laufflächen 13 aufweisen, von denen zwei Laufflächen 13 parallel zueinander stehen und die dritte rechtwinklig dazu angeordnet ist - und der Transportwagen 14 die Schienen 12 von der Seite her umgreift. Die Schienen 12 umfassen außerdem sowohl geradlinige als auch gekrümmte Abschnitte.

Ein Einsatz E in Fig. 1 zeigt schematisch einen Querschnitt durch das Schienensystem 10. Es sind die beiden Schienen 12 mit ihre jeweiligen Laufflächen 13 zu erkennen. Die Schienen 12 sind an einem Schienenträger 12a befestigt.

Um sich auf den Schienen 12 präzise und leichtgängig fortbewegen zu können, weist der hier beispielhaft zumindest in funktioneller Hinsicht symmetrisch ausgebildete Transportwagen 14 zwei Sätze von jeweils drei Laufrollen 20 auf (siehe Fig. 2). Die Laufrollen 20 sind jeweils an einem T-förmig ausgebildeten Laufrollenträger 22 drehbar gelagert. Unter "symmetrischer Ausbildung" ist also zu verstehen, dass als Gegendruckelement 15 ein zweiter, vergleichbar ausgebildeter Laufrollenträger 22 mit gleich vielen Laufrollen 20 vorgesehen ist, der des Weiteren - wie später näher erläutert - auch ein zumindest funktionell gleichwirkendes ausgebildetes Justagesystem aufweist.

Die Laufrollenträger 22 sind dabei über jeweils zwei gegeneinander vorgespannte Schrägkugellager 24 am Grundkörper 16 drehbar gelagert. Die Vorspannung der Schrägkugellager 24 wird im gezeigten Beispiel über ein Spannmittel 26 in Form einer Schraube 26 eingestellt, die von oben bzw. von unten direkt bzw. indirekt gegen die Schrägkugellager 24 drückt. Der Abstand bzw. die Ausrichtung der Laufrollenträger 22 relativ zu dem Grundkörper 16 ist jeweils über einen Distanzring 28 definiert. Je nachdem wie dick der Distanzring 28 ist bzw. ob er überhaupt eingesetzt ist oder nicht, definiert in welcher Lage oder Ausrichtung der Laufrollenträger 22 jeweils zu dem Grundkörper 16 befestigt ist. Insbesondere wird der Distanzring 28 so passend gewählt, dass der Transportwagen 14 optimal auf die Schiene 12 eingestellt ist.

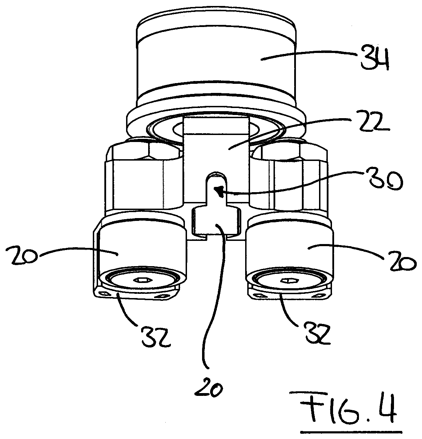

Die Steifigkeit der Laufrollenträger 22 wird durch jeweils ein Mittel zur Beeinflussung der Steifigkeit in Form eines Schlitzes 30 in dem Laurollenträger 22, welcher im vorliegenden Beispiel jeweils parallel zum Grundkörper 16 verläuft, festgelegt (siehe insbesondere Fig. 4). Der Schlitz 30 ermöglicht es, dass der Abstand zwischen den beiden parallel zueinander angeordneten Laufrollen 20 bis zu einem gewissen Grad - je nachdem wie elastisch das Material ist, aus dem der Laufrollenträger 22 gefertigt ist - auch im Betrieb noch passiv veränderbar ist. Außerdem wird es dadurch ermöglicht, dass sich die Laufrollen 20 in den gekrümmten Teilen der Schiene 12 besser an die gekrümmte Bahn anpassen können, wodurch die Kurvengängigkeit des Transportwagens 14 deutlich verbessert wird. Die Form und/oder Ausrichtung des Schlitzes 30 kann bedarfsgerecht gewählt werden.

In den Figuren 3 und 4 ist des Weiteren zu sehen, dass jeder Laufrolle 20 eine Schmiereinheit 32 zugeordnet ist, welche die jeweilige Laufrolle 20 mit Schmiermittel versorgt, um eine Langlebigkeit der Laufrollen 20 zu gewährleisten.

Außerdem zeigt die Fig. 4 auch, dass in der Praxis die Schrägkugellager 24 jeweils von einer Hülse 34 umgeben sind. Die Hülse 34 wird zur Montage des Laufrollenträgers 22 in eine entsprechende Bohrung des Grundkörpers 16 eingesetzt.

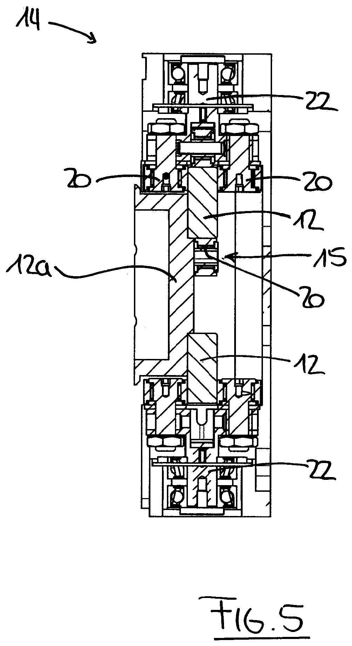

Die Fig. 5 zeigt einen Schnitt durch einen Transportwagen 14 gemäß einer zweiten Ausführungsform. Als Gegendruckelement 15 ist hierbei eine weitere einzelne Laufrolle 20 vorgesehen, die an dem Grundkörper 16 drehbar gelagert ist (optional in Ihrer Lage justierbar) und die dem Laufrollenträger 22 (bezogen auf die obere Schiene 12) gegenüber liegt. So ist es möglich, den Laufrollenträger 22 und die daran gelagerten Laufrollen 20 gegen die Schiene 12 zu spannen. Der zweite, der unteren Schiene 12 zugeordnete Laufrollenträger 22 weist lediglich zwei Laufrollen 20, die vor allem auf den Grundkörper 16 wirkende Kippmomente (z.B. erzeugt durch auf dem Objektträger 18 angeordnete Objekte und/oder durch deren Bearbeitung/Handling durch externe Vorrichtungen) aufnehmen. Die in Fig. 2 vorgesehene Rolle 20 mit einer horizontal liegenden Drehsachse des unteren Trägers 22, ist hier also nicht vorgesehen.

Es kann vorgesehen sein, die in Fig. 5 unteren Laufrollen 20 direkt an dem Grundkörper 16 zu lagern, so dass der untere Laufrollenträger 22 entfallen kann. Den Laufrollen 20 wird dann in Bezug auf die Schiene 12 bei Bedarf (z.B. abhängig von den zu erwartenden Kurvenraden der Schiene) etwas mehr Spiel gewährt werden, um übermäßige Verspannungen bei Kurvenfahrten zu vermeiden.

Wie bereits erläutert, ist die in Fig. 2 untere Konstruktion zur Schienenführung im Wesentlichen wie die obere ausgebildet. Insbesondere weist sie ebenso ein im Wesentlichen gleichartig ausgebildetes Justagesystem (Abstandselement, Schlitz, usw.) auf, um die Konstruktion bedarfsgerecht an die - im vorliegenden Beispiel - untere Schiene 12 anzupassen. Eine derartige - sozusagen symmetrische - Ausgestaltung Führungskomponenten des Transportwagens 14 ermöglichen eine größtmögliche Flexibilität bei der Montage des Transportwagens 14 am Schienensystem 10. Es ist dabei unwesentlich, ob sich der Transportwagen 14 wie im vorliegenden Fall auf zwei Schienen 12 bewegt oder ob nur eine Schiene 12 vorgesehen ist. Für die Ausführungsform gemäß Fig. 5 gilt - bis auf die nicht vorhandene "horizontale" Rolle 20 - Analoges.

Es wäre auch möglich, dass der gesamte - in der Darstellung von Fig. 5 untere - Teil des Transportwagens 14 weggelassen wird. Der zweite Laufrollenträger 22 wäre dementsprechend nicht vorhanden, da die extra Laufrolle 20 den Transportwagen bereits an der oberen Schiene 12 sichert.

Eine weitere, grundsätzlich denkbare Variante wäre auch, dass die zusätzliche Laufrolle 20 unterhalb der unteren Schiene 12 anstelle des zweiten Laufrollenträgers 22 vorgesehen ist und den Transportwagen 14 somit über zwei Schienen 12 hinweg an den Schienensystem 10 sichert.

Für eine optimale Anpassung des Transportwagens 14 an ein Schienensystem 10 mit zumindest einer Rechteckschiene 12 ist also in dem vorliegenden Ausführungsbeispiel zumindest ein T-förmiger Laufrollenträger 22 vorgesehen, an dem drei Laufrollen 20 drehbar gelagert sind und der einstückig ausgebildet ist. Der Laufrollenträger 22 ist drehbar am Grundkörper 16 über zwei gegeneinander vorgespannte Schrägkugellager 24 gelagert. Die Vorspannung dieser Lager 24 wird durch ein Spannungsmittel in Form einer Schraube 26 voreingestellt.

Der Abstand bzw. die Ausrichtung des Laufrollenträgers 22 relativ zum Grundkörper 16 des Transportwagens 14 wird durch ein Abstandselement (Distanzring) 28 eingestellt. Der Abstand bzw. die Lage und/oder Ausrichtung der Laufrollen 20 relativ zum Laufrollenträger hingegen wird durch zumindest ein Einstellmittel festgelegt. Dies kann beispielsweise eine Schraube sein, mit der die Laufrolle 20 jeweils am Laufrollenträger 22 mit einem gewissen Abstand festgeschraubt ist.

Des Weiteren ist noch ein Mittel zur Beeinflussung der Steifigkeit 30 des Laufrollenträgers 22 vorgesehen, das durch einen Schlitz 30 im einstückigen Körper des Laufrollenträgers 22 realisiert ist. Der Schlitz 30 verleiht dem Laufrollenträger 22 eine gewisse Elastizität und ermöglicht es dadurch, dass sich die Laufrollen 20 optimale an die Schienen 12 anpassen können, selbst wenn die Schiene 12 auch gekrümmte Abschnitte aufweist.

Durch die vorstehend beschriebenen Maßnahmen, die einzeln oder in beliebiger Kombination miteinander einsetzbar sind, kann der Transportwagen 14 - insbesondere zur Kompensation der Fertigungstoleranzen seiner Komponenten und/oder des Gesamtsystems - in zumindest zwei, vorzugsweise drei, Raumrichtungen optimal an die Schiene 12 angepasst werden.

Die räumliche Anordnung der Schienen 12 bzw. der sich darauf bewegenden Transportwagen 14 kann bedarfsgerecht gewählt werden. Es ist für die bei den erfindungsgemäßen Transportwagen 14 unwesentlich, von welcher räumlichen Richtung aus, deren Laufrollen 20 die entsprechende Schiene 12 umgreifen. Je nach Ausrichtung des Transportwagens 14 zur Schiene 12 muss lediglich die Ausrichtung des Objektträgers 18 passend gewählt werden, damit auf dem Objektträger 18 auch tatsächlich Objekte transportiert werden können. Welche der Laufrollen 20 dabei die Gewichtskraft des Objektträgers 18 aufnimmt, ist unwesentlich.

D.h. beispielsweise kann das Schienensystem auch nur eine Schiene, insbesondere eine Schiene mit rechteckigem Querschnitt, umfassen und/oder das Schienensystem ist gegenüber der in den Fig. gezeigten Anordnung gekippt, z.B. um 90°. Die Führung der Transportwagen 14 funktioniert auch dann noch zuverlässig.

### Bezugszeichenliste

- 10: Schienensystem
- 12: Schiene
- 12a: Schienenträger
- 13: Lauffläche
- 14: Transportwagen
- 15: Gegendruckelement
- 16: Grundkörper
- 18: Objektträger
- 20: Laufrolle
- 22: Laufrollenträger
- 24: Wälzlager
- 26: Spannungsmittel
- 28: Abstandselement
- 30: Mittel zur Beeinflussung der Steifigkeit
- 32: Schmiereinheit
- 34: Hülse
- E: Einsatz

## Patentansprüche

1. Transportwagen (14) zum Transportieren von Objekten für ein Schienensystem (10) mit zumindest einer Schiene (12), die zumindest drei Laufflächen (13) aufweist, umfassend:
- einen Grundkörper (16) mit einem Objektträger (18) zur Aufnahme zumindest eines Objektes,
- einen an dem Grundkörper (16) drehbar gelagerten Laufrollenträger (22), an dem zumindest eine erste, eine zweite und eine dritte Laufrolle (20) drehbar gelagert sind, insbesondere wobei der Laufrollenträger (22) einstückig ausgebildet ist, und
- ein Justagesystem mit einer Laufrollenträgerjustageeinrichtung zur Ausrichtung des Laufrollenträgers (22) relativ zum Grundkörper (16) und mit einer Laufrollenjustageeinrichtung zur relativen Ausrichtung der Laufrollen (20) zueinander und/oder zum Grundkörper (16),
**dadurch gekennzeichnet, dass**
zur drehbaren Lagerung des Laufrollenträgers (22) zumindest zwei Wälzlager (24), insbesondere Schrägkugellager, und ein Spannungsmittel (26) vorgesehen sind, mit dem die zumindest zwei Wälzlager (24) gegeneinander vorspannbar sind.

2. Transportwagen (14) nach Anspruch 1,
wobei die Rotationsachsen der ersten und der zweiten Laufrolle (20) parallel zueinander angeordnet sind und die Rotationsachse der dritten Laufrolle (20) senkrecht zu den Rotationsachsen der ersten und zweiten Laufrolle (20) steht.

3. Transportwagen (14) nach einem der vorhergehenden Ansprüche,
wobei die Laufrollenträgerjustageeinrichtung zumindest ein Abstandselement (28) zum Festlegen eines Abstands und/oder einer Lage des Laufrollenträgers (22) zum Grundkörper (16) aufweist, insbesondere wobei das Abstandselement (28) zumindest eine zwischen dem Grundkörper (16) und dem Laufrollenträger (22) einlegbare Scheibe ist.

4. Transportwagen (14) nach einem der vorhergehenden Ansprüche,
wobei die Laufrollenjustageeinrichtung zumindest ein Einstellmittel zum Einstellen eines Abstands einer Lage und/oder einer Ausrichtung von zumindest einer Laufrolle (20) relativ zum Laufrollenträger (22) aufweist.

5. Transportwagen (14) nach Anspruch 4,
wobei durch das Einstellmittel eine Lage und/oder Ausrichtung der Rotationsachse zumindest einer Laufrolle (20) zum Laufrollenträger (22) veränderbar ist.

6. Transportwagen (14) nach einem der vorhergehenden Ansprüche,
wobei zusätzlich zumindest ein Mittel zur Beeinflussung der Steifigkeit (30) des Grundkörpers (16) und/oder des Laufrollenträgers (22) vorgesehen ist.

7. Transportwagen (14) nach Anspruch 6,
wobei das Mittel zur Beeinflussung der Steifigkeit (30) zumindest ein Schlitz in dem Grundkörper (16) und/oder dem Laufrollenträger (22) ist, insbesondere wobei der Schlitz (30) im Wesentlichen parallel zu der Rotationsachse zumindest einer der Laufrollen (20) angeordnet ist.

8. Transportwagen (14) nach einem der vorhergehenden Ansprüche,
wobei an einer dem Objektträger (18) gegenüberliegenden Seite des Grundkörpers (16) ein Gegendruckelement (15) vorgesehen ist, das den Transportwagen (14) an der Schiene (12) des Schienensystems (10) sichert, insbesondere unter einer Vorspannung.

9. Transportwagen (14) nach Anspruch 8,
wobei das Gegendruckelement (15) einen an dem Grundkörper (16) drehbar gelagerten Laufrollenträger (22) aufweist, an dem zumindest eine vierte Laufrolle (20) drehbar gelagert ist, insbesondere an dem zumindest drei Laufrollen (20) drehbar gelagert sind.

10. Transportwagen (14) nach Anspruch 8 oder 9,
wobei das Gegendruckelement (15) zusätzlich ein Justagesystem mit einer Laufrollenträgerjustageeinrichtung zur Ausrichtung des Laufrollenträgers (22) relativ zum Grundkörper (16) und/oder mit einer Laufrollenjustageeinrichtung zur relativen Ausrichtung der Laufrolle (20) zum Grundkörper (16) und/oder der Laufrollen (20) - falls mehr als eine Laufrolle (20) vorhanden ist - aufweist.

11. Transportwagen (14) nach einem der vorhergehenden Ansprüche,
wobei zumindest einer der, insbesondere jeder der Laufrollen (20) eine Schmiereinheit (32) zugeordnet ist, die die jeweilige Laufrolle (20) mit einem Schmiermittel versorgt.

12. Transportwagen (14) nach einem der vorhergehenden Ansprüche, wobei der Laufrollenträger (22) im Wesentlichen T-förmig ausgebildet ist.

13. Transportsystem mit einem Schienensystem (10) mit zumindest einer Schiene (12), die zumindest drei Laufflächen (13) aufweist, und mit zumindest einem Transportwagen (14) nach einem der vorhergehenden Ansprüche, insbesondere wobei zumindest zwei Laufflächen (13) parallel zueinander angeordnet und/oder zumindest zwei der Laufflächen (13) rechtwinklig zueinander angeordnet sind.

## Claims

1. A transport trolley (14) for transporting objects for a rail system (10) having at least one rail (12) which comprises at least three running surfaces (13), said transport trolley (14) comprising:
- a base body (16) with an object carrier (18) for receiving at least one object,
- a roller carrier (22) which is rotatably supported at the base body (16) and at which at least a first, a second and a third roller (20) are rotatably supported, in particular wherein the roller carrier (22) is formed in one piece, and
- an adjustment system having a roller carrier adjustment device for aligning the roller carrier (22) relative to the base body (16) and having a roller adjustment device for the relative alignment of the rollers (20) with respect to one another and/or to the base body (16),
**characterized in that**,
for the rotatable support of the roller carrier (22), at least two rolling element bearings (24), in particular angular contact ball bearings, and a tensioning means (26), by which the at least two rolling element bearings (24) can be preloaded against one another, are provided.

2. A transport trolley (14) according to claim 1,
wherein the axes of rotation of the first and the second roller (20) are arranged parallel to one another and the axis of rotation of the third roller (20) is perpendicular to the axes of rotation of the first and the second roller (20).

3. A transport trolley (14) according to one of the preceding claims,
wherein the roller carrier adjustment device has at least one spacer element (28) for defining a distance and/or a position of the roller carrier (22) relative to the base body (16), in particular wherein the spacer element (28) is at least one washer which is insertable between the base body (16) and the roller carrier (22).

4. A transport trolley (14) according to any one of the preceding claims,
wherein the roller adjustment device has at least one setting means for setting a distance, a position and/or an alignment of at least one roller (20) relative to the roller carrier (22).

5. A transport trolley (14) according to claim 4,
wherein a position and/or alignment of the axis of rotation of at least one roller (20) relative to the roller carrier (22) can be varied by the setting means.

6. A transport trolley (14) according to any one of the preceding claims,
wherein at least one means for influencing the stiffness (30) of the base body (16) and/or the roller carrier (22) is additionally provided.

7. A transport trolley (14) according to claim 6,
wherein the means for influencing the stiffness (30) is at least one slot in the base body (16) and/or the roller carrier (22), in particular wherein the slot (30) is arranged substantially parallel to the axis of rotation of at least one of the rollers (20).

8. A transport trolley (14) according to any one of the preceding claims,
wherein a counterpressure element (15) is provided at a side of the base body (16) disposed opposite the object carrier (18) and secures the transport trolley (14) to the rail (12) of the rail system (10), in particular under a preload.

9. A transport trolley (14) according to claim 8,
wherein the counterpressure element (15) has a roller carrier (22) which is rotatably supported at the base body (16) and at which at least a fourth roller (20) is rotatably supported, in particular at which at least three rollers (20) are rotatably supported.

10. A transport trolley (14) according to claim 8 or 9,
wherein the counterpressure element (15) additionally has an adjustment system having a roller carrier adjustment device for aligning the roller carrier (22) relative to the base body (16) and/or to a roller adjustment device for the relative alignment of the roller (20) to the base body (16) and/or the rollers (20) - if more than one roller (20) is present.

11. A transport trolley (14) according to any one of the preceding claims,
wherein a lubrication unit (32), which supplies the respective roller (20) with a lubricant, is associated with least one of, in particular each of, the rollers (20).

12. A transport trolley (14) according to any one of the preceding claims,
wherein the roller carrier (22) is substantially T-shaped.

13. A transport system comprising a rail system (10) having at least one rail (12), which has at least three running surfaces (13), and having at least one transport trolley (14) according to any one of the preceding claims, in particular wherein at least two running surfaces (13) are arranged parallel to one another and/or at least two of the running surfaces (13) are arranged at right angles to one another.

## Revendications

1. Chariot de transport (14) destiné au transport d'objets pour un système de rails (10) comportant au moins un rail (12) qui comporte au moins trois surfaces de roulement (13), comprenant :
- un corps de base (16) muni d'un support d'objet (18) destiné à recevoir au moins un objet,
- un support de galets de roulement (22) monté de manière rotative sur le corps de base (16), sur lequel au moins un premier, un deuxième et un troisième galets de roulement (20) sont montés de manière rotative, le support de galets de roulement (22) étant en particulier réalisé d'un seul tenant, et
- un système de réglage comprenant un dispositif de réglage du support de galets de roulement destiné à aligner le support de galets de roulement (22) par rapport au corps de base (16) et un dispositif de réglage des galets de roulement destiné à aligner les galets de roulement (20) les uns par rapport aux autres et/ou par rapport au corps de base (16),
**caractérisé en ce que**
pour le montage rotatif du support de galets de roulement (22), au moins deux roulements (24), en particulier des roulements à billes à contact oblique, et un moyen de tension (26) sont prévus, grâce auquel les au moins deux roulements (24) peuvent être précontraints l'un contre l'autre.

2. Chariot de transport (14) selon la revendication 1,
dans lequel les axes de rotation des premier et deuxième galets de roulement (20) sont disposés parallèlement l'un à l'autre et l'axe de rotation du troisième galet de roulement (20) est perpendiculaire aux axes de rotation des premier et deuxième galets de roulement (20).

3. Chariot de transport (14) selon l'une des revendications précédentes,
dans lequel le dispositif de réglage du support de galets de roulement comporte au moins un élément d'écartement (28) destiné à définir une distance et/ou une position du support de galets de roulement (22) par rapport au corps de base (16), en particulier dans lequel l'élément d'écartement (28) est au moins une rondelle pouvant être insérée entre le corps de base (16) et le support de galets de roulement (22).

4. Chariot de transport (14) selon l'une des revendications précédentes,
dans lequel le dispositif de réglage des galets de roulement comporte au moins un moyen de réglage permettant de régler la distance, la position et/ou l'alignement d'au moins un galet de roulement (20) par rapport au support de galets de roulement (22).

5. Chariot de transport (14) selon la revendication 4,
dans lequel le moyen de réglage permet de modifier la position et/ou l'alignement de l'axe de rotation d'au moins un galet de roulement (20) par rapport au support de galets de roulement (22).

6. Chariot de transport (14) selon l'une des revendications précédentes,
dans lequel il est en outre prévu au moins un moyen pour influencer la rigidité (30) du corps de base (16) et/ou du support de galets de roulement (22).

7. Chariot de transport (14) selon la revendication 6,
dans lequel le moyen pour influencer la rigidité (30) est au moins une fente dans le corps de base (16) et/ou le support de galets de roulement (22), en particulier la fente (30) étant disposée essentiellement parallèlement à l'axe de rotation d'au moins l'un des galets de roulement (20).

8. Chariot de transport (14) selon l'une des revendications précédentes, dans lequel un élément de contre-pression (15) est prévu sur un côté du corps de base (16) opposé au support d'objet (18), lequel élément de contre-pression (15) fixe le chariot de transport (14) sur le rail (12) du système de rails (10), en particulier sous une précontrainte.

9. Chariot de transport (14) selon la revendication 8,
dans lequel l'élément de contre-pression (15) comporte un support de galets de roulement (22) monté de manière rotative sur le corps de base (16), sur lequel au moins un quatrième galet de roulement (20) est monté de manière rotative, en particulier sur lequel au moins trois galets de roulement (20) sont montés de manière rotative.

10. Chariot de transport (14) selon la revendication 8 ou 9,
dans lequel l'élément de contre-pression (15) comporte en outre un système de réglage comprenant un dispositif de réglage du support de galets de roulement pour aligner le support de galets de roulement (22) par rapport au corps de base (16) et/ou un dispositif de réglage des galets de roulement pour aligner le galet de roulement (20) par rapport au corps de base (16) et/ou les galets de roulement (20) - s'il y a plus d'un galet de roulement (20).

11. Chariot de transport (14) selon l'une des revendications précédentes,
dans lequel au moins l'un des galets de roulement (20), en particulier chacun d'entre eux, est associé à une unité de lubrification (32) qui alimente le galet de roulement (20) concerné en lubrifiant.

12. Chariot de transport (14) selon l'une des revendications précédentes, dans lequel le support de galets de roulement (22) est essentiellement en forme de T.

13. Système de transport comprenant un système de rails (10) avec au moins un rail (12) comportant au moins trois surfaces de roulement (13), et comprenant au moins un chariot de transport (14) selon l'une des revendications précédentes, en particulier dans lequel au moins deux surfaces de roulement (13) sont disposées parallèlement l'une à l'autre et/ou au moins deux des surfaces de roulement (13) sont disposées à angle droit l'une par rapport à l'autre.
